# EUROPEAN PATENT APPLICATION

(11) **EP 4 800 908 A1**
(43) Date of publication of application: **02.09.2026**
(21) Application number: 26152080.3
(22) Date of filing: 15.01.2026
(51) Int. Cl.: H02M 7/539, H02M 3/155, H02M 3/158, H02M 7/5395

(54) **POWER CONVERSION SYSTEM**

(30) Priority: 27.02.2025 JP 2025030631
(71) Applicant: DENSO CORPORATION, Kariya-city, Aichi-pref. 448-8661 (JP)
(72) Inventor: SUZUKI, Daisuke, 470-0111 Nisshin-city, Aichi-pref. (JP); OHIRA, Koji, 448-8661 Kariya-city, Aichi-pref. (JP); KABEYA, Satoki, 448-8661 Kariya-city, Aichi-pref. (JP)
(74) Representative: TBK

(57) **Abstract**

A power conversion system includes a power conversion device and a controller. The power conversion device includes a three-phase full-bridge circuit to which DC power is input and which has three legs connected in parallel between a high-potential line and a low-potential line. In one or two phases of the three-phase full-bridge circuit, a midpoint of the corresponding leg is connected to a power supply wiring for a load via a reactor. The controller includes a first controller working to control a switching operation of the power conversion device by receiving, as inputs, a pseudo torque command signal based on an output command signal for the load and a phase angle signal based on a detection signal indicative of supplied electric power, and a second controller working to generate and output the pseudo torque command signal and the phase angle signal to the first controller. This enables the power conversion system to be capable of supplying electric power in accordance with an output request without changing software, even when an existing power conversion device is repurposed.

## Description

The present application claims the benefit of priority of Japanese Patent Application No. 2025-030631 filed on February 27, 2025, the disclosure of which is incorporated in its entirety herein by reference.

### Technical Field

The present disclosure generally relates to a power conversion system.

### Background art

Usually, it is desirable for power supply systems or battery systems that deliver electric power to stationary power-consumption equipment to supply the electric power in accordance with system demands with improved controllability. For example, Japanese patent First Publication No. 2024-52050 discloses a power supply system in which battery units, each including a batter pack and a converter, are connected in parallel to each other. The power supply system includes a controller for each battery unit to control the operation of the converter in terms of output voltage, in order to minimize a risk that an electrical load on one of the battery units increases due to power deviations between the battery units arising from sensor errors or control-response delays.

The above-referenced publication also proposes a system that promotes the recycling and reuse of recovered components from a vehicle by repurposing battery packs and controllers. For example, a power conversion device configured as a three-phase inverter is repurposed as the converter for each battery unit. A chopper circuit working for each phase of the three-phase inverter is used as the converter used for each battery pack. Each converter is voltage-controlled in response to an output-voltage command for each battery unit.

The power supply system, as taught in the above-referenced publication, is equipped with the plurality of battery units in which the converters, each working for one of the phases of the three-phase inverter, are electrically connected to the battery packs, respectively. The converter of each battery unit is controlled in a feedback mode so that the output voltage of the corresponding battery unit matches a target value (i.e., the output-voltage command). It is not possible for such control to use a control strategy programmed for a rotating electrical machine, thus necessitating alternative software for performing the switching operation for each phase.

### SUMMARY

This disclosure has been made in view of the above problems. It is an object of this disclosure to provide a power conversion system that is capable of supplying electric power in accordance with output requirements without requiring any modification of software, even in cases where an existing power conversion device is repurposed.

According to the first aspect of this disclosure, there is provided a power conversion system which comprises: (a) a power conversion device (3) which works to convert power delivered from a power source into power supplied to a stationary load (2); and (b) a controller (4) which works to control an operation of the power conversion device. The power conversion device includes a three-phase full-bridge circuit (31) to which a dc power is inputted. The three-phase full-bridge circuit includes a first leg (31u), a second leg (31v), and a third leg (31w) which corresponds to a first phase, a second phase, and a third phase, respectively, and are connected in parallel to each other between a high-potential line (101) and a low-potential line (102). Each of the first, second, and third legs includes an upper-arm switch (321u, 321v, 321w) and a lower-arm switch (322u, 322v, 322w) which are connected in series with each other. One or two of the first to third legs of the three-phase full-bridge circuit have midpoints that are connected, through reactors (33v, 33w), to a power supply wiring (5) for the load. The controller includes a first controller (41) and a second controller (42). The first controller receives, as inputs, a pseudo torque command signal derived from an output command signal and a phase angle signal derived from a detection signal indicative of the supplied power, and controls a switching operation of the power conversion device. The second controller works to produce and output the pseudo torque command signal and the phase angle signal to the first controller.

In the power conversion system having the configuration described above, the power conversion device converts DC power supplied to one or two phases of the three-phase full-bridge circuit and outputs the converted power to the power supply wiring for the load. The first controller works to control the power conversion device using the pseudo torque command signal representing torque generated in the rotational motion into which the output command signal for the load is converted and the phase angle signal into which the detection signal indicative of supplied power is phase-converted. This enables a power conversion device and/or a controller that performs the above control tasks based on the torque command to be repurposed.

As apparent from the above discussion, the above structure makes it possible to provide a power conversion system capable of supplying electric power in accordance with an output request without changing the software, even when an existing power conversion device is repurposed. It should be noted that the reference numerals in parentheses in the claims and the summary are provided to indicate correspondence with specific elements described in the embodiments set forth below, and are not intended to limit the technical scope of the present invention.

### BRIEF DESCRIPTION OF THE DRAWINGS

The present disclosure will be understood more fully from the detailed description given hereinbelow and from the accompanying drawings of the preferred embodiments, which, however, should not be taken to limit the invention to the specific embodiments but are for the purpose of explanation and understanding only.

In the drawings:
Fig. 1 is a circuit diagram illustrating a schematic configuration of a power conversion system according to the first embodiment;
Fig. 2 is a block diagram illustrating a configuration of a controller of a power conversion system according to the first embodiment;
Fig. 3 is a waveform diagram illustrating a relationship among three-phase currents, duty commands, and gate commands according to the first embodiment;
Fig. 4 is a block diagram illustrating a detailed configuration of a controller of a power conversion system according to the first embodiment;
Fig. 5 is a waveform diagram illustrating a relationship between three-phase duty commands and gate commands for upper- and lower-arms of a V-phase according to the first embodiment;
Fig. 6 is a waveform diagram illustrating a relationship among three-phase currents, a phase angle, and a resolver signal according to the first embodiment;
Fig. 7 is a circuit diagram illustrating a schematic configuration of a power conversion system according to the second embodiment;
Fig. 8 is a circuit diagram illustrating a schematic configuration of a power conversion system according to the third embodiment;
Fig. 9 is a circuit diagram illustrating a schematic configuration of a power conversion system according to the

### fourth embodiment; and

Fig. 10 is a circuit diagram illustrating a schematic configuration of a power conversion system according to the fifth embodiment.

### MODES FOR CARRYING OUT THE INVENTION

### FIRST EMBODIMENT

The first embodiment of a power conversion system will be described with reference to the drawings.

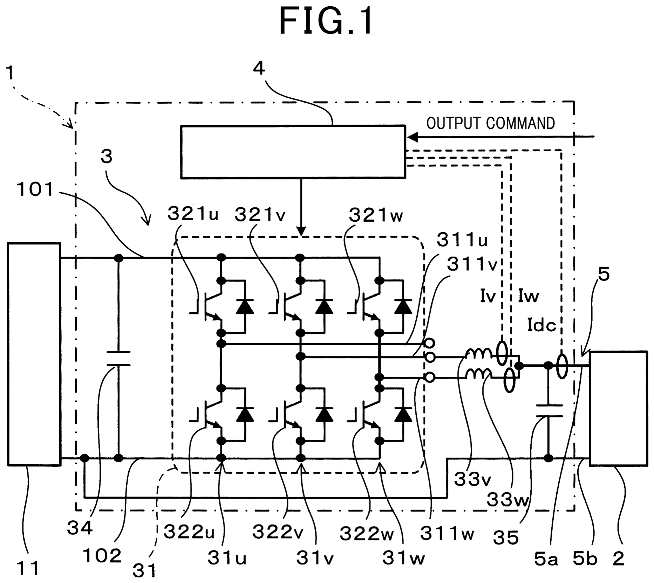

As shown in Fig. 1, the power conversion system 1 of the present embodiment, as illustrated in Fig. 1, includes the power conversion device 3 and the controller 4. The power conversion device 3 works to convert electrical power supplied from a power source into power supplied to the stationary load 2. The controller 4 works to control an operation of the power conversion device 3. The power conversion device 3 includes the three-phase full-bridge circuit 31 to which direct-current power is input. The power conversion device 3 is illustrated as including the single three-phase full-bridge circuit 31. The power supplied to the power conversion device 3 is direct-current power outputted from the direct-current power source 11.

The three-phase full-bridge circuit 31 includes three legs 31u, 31v, and 31w (which will also be referred to below as first, second, and third legs), which are connected in parallel to each other between the high-potential line 101 and the low-potential line 102. The leg 31u includes the upper-arm switch 321u and the lower-arm switch 322u which are connected in series. The leg 31v includes the upper-arm switch 321v and the lower-arm switch 322v which are connected in series. The leg 31w includes the upper-arm switch 321w and the lower-arm switch 322w which are connected in series. The legs 31u, 31v, and 31w correspond respectively to three phases (U-phase, V-phase, and W-phase).

The three-phase full-bridge circuit 31 has one or two of its three phases connected to the power supply wiring 5 for supplying electric power to the load 2. In the illustrated example, the midpoints of the legs 31v and 31w corresponding to two of the three phases (i.e., the V-phase and the W-phase) are connected to the power supply wiring 5 via reactors 33v and 33w. The midpoints of the legs 31v and 31w serve as connection points of the series circuits formed by the respective upper-arm switches 321v and 321w and the respective lower-arm switches 322v and 322w.

The controller 4 controls the operation of the three-phase full-bridge circuit 31 as a function of an output command to the load 2 and detection signals representing the electric power supplied to the load 2. Specifically, for the V-phase and W-phase legs 31v and 31w connected to the power supply wiring 5, the controller 4 controls on or off operations of the upper-arm switches 321v and 321w and the lower-arm switches 322v and 322w. The detection signals representing the supplied electric power include the current signals Iv and Iw output from legs 31v and 31w, as well as the current signal Idc appearing in the power supply wiring 5.

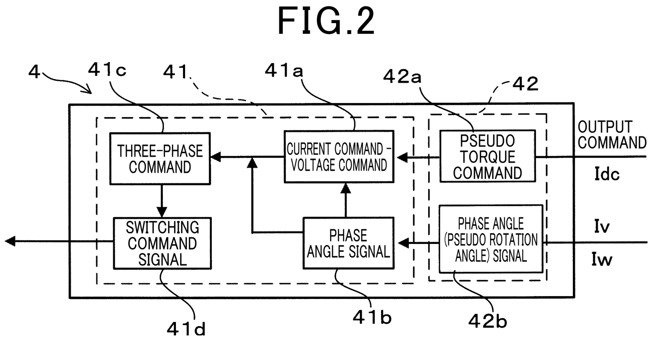

The controller 4, as illustrated in Fig. 2, includes the first controller 41 and the second controller 42. The first controller 41 works to control the switching operation of the power conversion device 3 using, as inputs, a pseudo torque command signal derived using the output command signal to the load 2 and a phase angle signal derived using the detection signal indicative of the electric power supplied to the load 2. The second controller 42 works to generate the pseudo torque command signal and the phase angle signal, and output them to the first controller 41.

The second controller 42 of the controller 4 works to convert the output command signal for power outputted to the load 2, into a torque-equivalent signal, corresponding to torque generated by rotational motion of a rotating machine, such as an electric motor mounted in an electrical vehicle, by using the detection signal indicating the supplied electric power, and output it as the pseudo torque command signal. The second controller 42 also calculates a phase angle signal using the detection signal indicating the supplied electric power, convert it into a rotational-angle-equivalent signal, substantially representing or corresponding to a rotational angle in the rotational motion of the rotating machine, and output it as a pseudo rotational angle signal.

The first controller 41 works to generate a switching command signal for controlling the switching of the upper-arm switches 321v and 321w and the lower-arm switches 322v and 322w, using the pseudo torque command signal and the phase angle signal (or the pseudo rotational angle signal) input from the second controller 42.

Specifically, the first controller 41 of the controller 4 includes the first signal generator 41a, the second signal generator 41b, the third signal generator 41c, and the fourth signal generator 41d. The first signal generator 41a converts the pseudo torque command signal into a voltage command signal. The second signal generator 41b reconverts the pseudo rotational angle signal into the phase angle signal. The third signal generator 41c generates a three-phase voltage command signal based on the converted voltage command signal and the phase angle signal. The fourth signal generator 41d generates the switching command signal using the three-phase voltage command signal.

Further, the second controller 42 includes the first converter 42a and the second converter 42b. The first converter 42a works to convert the output command signal into the pseudo torque command signal. The second converter 42b works to convert the phase angle signal into the pseudo rotational angle signal.

The pseudo torque command signal is input to the first controller 41 as a signal which makes the first controller 41 process the output command signal for the load 2. The pseudo torque command signal corresponds to a signal which commands torque in rotational motion, that is, a torque command representing a rotational force or target torque required to be produced by a rotating machine (e.g., an electric motor mounted in a vehicle). The first converter 42a works to convert the output command (e.g., a current command or a voltage command) indicative of electric power required for the load 2 into the torque-equivalent signal representing the torque generated by the rotational motion of the rotating machine. This conversion is performed by arithmetic processing using the detection signal indicative of electric power supplied to the load 2. The first converter 42a outputs the torque-equivalent signal in the form of the pseudo torque command signal.

Further, the pseudo rotational angle signal is a rotational position signal in the rotational motion which represents, for example, a rotational angle of the rotating machine. When a rotational angle signal is required as an input signal to the first controller 41, the second controller 42 works to convert the phase angle signal into the rotational-angle-equivalent signal corresponding to the rotational angle in the rotational motion and output it to the first controller 41. The second converter 42b works to convert, for example, a phase signal (e.g., a current phase or a voltage phase) of electric power supplied from each phase of the power conversion device 3 to the load 2 into a signal corresponding to the rotational angle by performing arithmetic processing using the phase signal, and outputs it in the form of the pseudo rotational angle signal.

For example, the first signal generator 41a is capable of converting the pseudo torque command signal into a current command signal in the *d-q* coordinate system, and also converting the current command signal into the voltage command signal using the phase-angle signal. In this case, the third signal generator 41c converts the voltage command signal into the three-phase voltage command signal, after which the fourth signal generator 41d converts the three-phase voltage command signal into the switching command signal for each phase.

The supply of electric power to the load 2 is achieved by controlling the switching operation of the three-phase full-bridge circuit 31 in response to the switching command signal to output an electrical power required by the load 2 from the power conversion device 3. In other words, the output power from the power conversion device 3 is controlled by manipulating the pseudo signal input from the second controller 42 to the first controller 41. For example, the waveform shape of the output current or the output voltage is controlled using the pseudo rotational angle signal. Additionally, the magnitude of the output current or the output voltage is also controlled by the pseudo torque command signal.

The electric power supplied to the load 2 may be, for example, *DC* power. In this case, the controller 4 works to output *DC* power to the first controller 41 with a magnitude based on the output command signal for the load 2 by setting the pseudo rotational angle signal (i.e., the phase-angle signal) generated by the second controller 42 to a constant value (i.e., a constant signal). The controller 4 includes a microcomputer including a processor, a memory, and the like, and peripheral circuits thereof. Alternatively, the controller 4 may be implemented by a plurality of microcomputers and peripheral devices thereof.

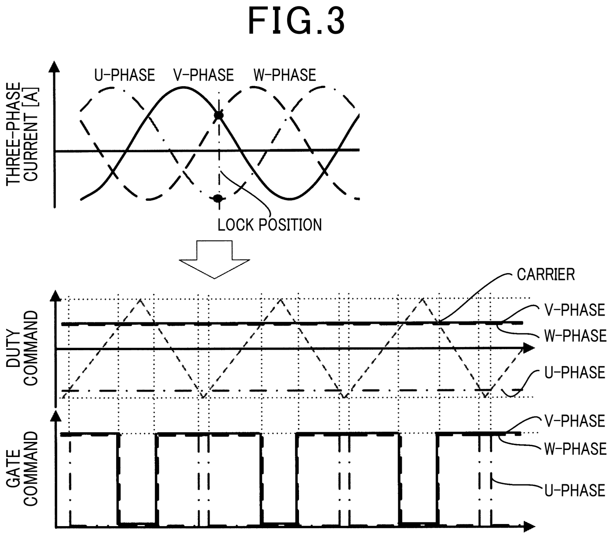

Fig. 3 illustrates an example relationship between the switching command signal generated by the first controller 41 of the controller 4 and a three-phase power waveform when the power conversion device 3 is required to output *DC* power. The first controller 41 is capable of converting a phase angle derived based on the detection signal into a duty command such that each phase current follows a required output waveform, generates a rectangular-wave signal as a gate command by comparing the duty command with a carrier wave, and outputs the rectangular-wave signal as the switching command signal.

In the above case, the switching command signal is generated to keep the output current constant using a duty ratio (i.e., duty cycle) corresponding to a given phase angle. In a case where two of the three phases are used, the output currents of the V- and W-phases may be controlled to be equal to each other by using a phase angle, as demonstrated by the lock position in Fig. 3, at which the V-phase current waveform coincides with the W-phase current waveform.

Accordingly, the power conversion system 1 may be configured using an off-the-shelf three-phase inverter and a corresponding control unit without requiring software modification. Details of the switching control performed by the controller 4 will be described later.

Next, a specific application example of the power conversion system 1 according to the present embodiment will be described.

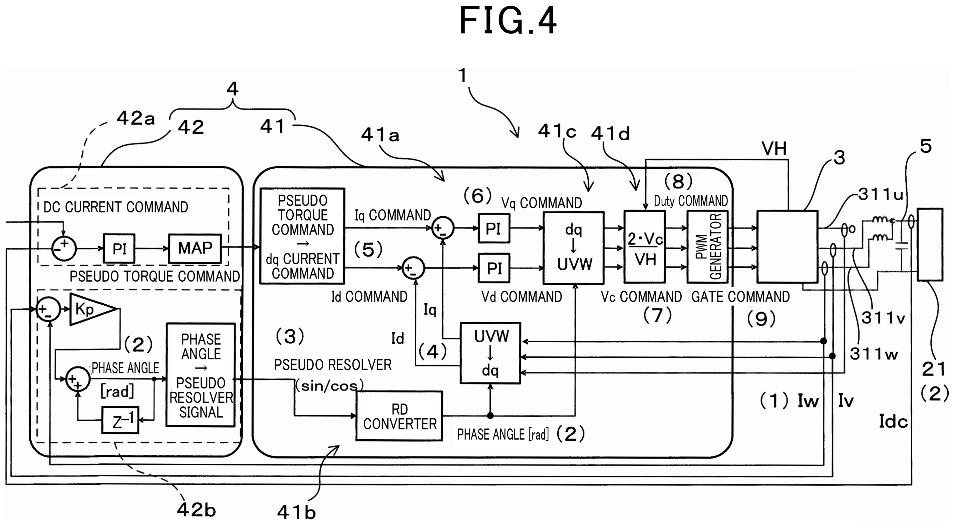

As illustrated in Fig. 4, the power conversion system 1 according to the present embodiment may constitute part of a power supply system that supplies *DC* power to the power consumption facility 21, such as the stationary load 2. The source power may be supplied from a *DC* power source (e.g., the direct-current power source 11 shown in Fig. 1), which may be a storage battery or the like. The power conversion device 3 converts the source power into *DC* power corresponding to a required power of the power consumption facility 21.

Examples of the power consumption facility 21 include an electrolyzer that generates hydrogen by electrolyzing a raw material. The electrolyzer generates hydrogen by electrolyzing water vapor, which is a raw-material gas, using power supplied by the power conversion system 1. The electrolyzer may include, for example, an SOEC (solid oxide electrolysis cell). Alternatively, instead of the power consumption facility 21, a system may be used which includes a power storage device as the load 2 and works to electrically charge the power storage device using the power conversion device 3.

Referring back to Fig. 1, the high-potential line 101 and the low-potential line 102 of the power conversion device 3 are connected to a positive electrode and a negative electrode of the direct-current power source 11, respectively. The *DC-link capacitor* 34 is connected between the high-potential line 101 and the low-potential line 102 and arranged between the direct-current power source 11 and the three-phase full-bridge circuit 31. Midpoints of legs 31u, 31v, and 31w of the three-phase full-bridge circuit 31 are connected to output wirings or lines 311u, 311v, and 311w, respectively. The output lines 311u is an unused wiring.

The output lines 311v and 311w are connected in parallel to the positive line 5a of the power supply wiring 5 through the reactors 33v and 33w, respectively. The positive line 5a is connected to a positive electrode of the load 2. The negative line 5b is connected to a negative electrode of the load 2 and to the low-potential line 102, which is a low-potential portion of the power conversion device 3. The filter capacitor 35 is connected between the positive line 5a and the negative line 5b.

In the three-phase full-bridge circuit 31, the upper-arm switches 321u, 321v, and 321w and the lower-arm switches 322u, 322v, and 322w that constitute the three legs 31u, 31v, and 31w may each be implemented by, for example, an IGBT (Insulated-Gate Bipolar Transistor). Each IGBT includes a freewheeling diode connected in reverse between a collector and an emitter thereof. The upper-arm switches 321u, 321v, and 321w and the lower-arm switches 322u, 322v, and 322w may alternatively be implemented by gate-voltage-controlled semiconductor switching devices, such as MOSFETs (Metal-Oxide-Semiconductor Field-Effect Transistors), other than IGBTs.

In the legs 31u, 31v, and 31w, the upper-arm switches 321u, 321v, and 321w are connected at collectors thereof to the high-potential line 101. The lower-arm switches 322u, 322v, and 322w are connected at emitters thereof to the low-potential line 102. The low-potential line 102 may be set to, for example, a ground potential.

The power conversion system 1 according to the present embodiment may be configured by repurposing, for example, a power control unit (PCU) for an electric vehicle. A typical vehicle PCU includes a three-phase inverter that supplies three-phase *AC* power to an electrical motor, and an inverter control device. In the present embodiment, the three-phase inverter is used as the three-phase full-bridge circuit 31 of the power conversion device 3, and the inverter control device is used as the controller 4.

In Fig. 4, the controller 4 includes the first controller 41 serving as the above-described inverter control device and the second controller 42 that generates a pseudo signal to be input to the first controller 41. In general, the inverter control device of a vehicle PCU detects an electrical angle (approximately a current phase angle) of an electrical motor using a resolver and controls each phase of the three-phase inverter using a resolver signal fed back from the resolver and a torque command for the motor. Switching control of the three-phase inverter is performed for each phase using a PWM (Pulse Width Modulation) method in which an on-to-off duration ratio, i.e., a duty factor for each of the upper and lower arms of the three-phase inverter is calculated to generate a gate command.

Accordingly, to enable control of the power conversion device 3 without changing a control method (e.g., the input signals to the first controller 41 and processing performed by the first controller 41), the input signal to the first controller 41 may be set to the pseudo torque command signal corresponding to the torque command signal and the pseudo resolver signal corresponding to the resolver signal (i.e., an output from the resolver). Further, the second controller 42 is configured to convert the output command signal (e.g., a DC current command) for the load 2 into the torque command signal and output it as the pseudo torque command signal, and to convert the detection signal indicating the supplied electric power (e.g., *Iv* and *Iw*) into the resolver signal and output it as the pseudo resolver signal. The resolver signal is the detection signal output from the resolver (i.e., a rotational angle signal). The pseudo resolver signal corresponds to the pseudo rotational angle signal.

Specifically, respective phase currents measured at the output lines 311u, 311v, and 311w of the three-phase full-bridge circuit 31 are input to the first controller 41, and, at the same time, the phase currents Iv and Iw of the two phases that are in operation are input to the second controller 42 (see (1) in Fig. 4). In the second controller 42, the second converter 42b mathematically calculates a phase angle (unit: rad) using a difference between the input phase currents Iv and Iw and a predetermined coefficient Kp (see (2) in Fig. 4). The second converter 42b also converts the phase angle into the pseudo resolver signal and outputs it to the first controller 41 (see (3) in Fig. 4).

Further, to the first converter 42a of the second controller 42, a DC current command signal, as provided by a requirement for the load 2, is input, and the DC current signal Idc detected on the power supply wiring 5 to the load 2 is also input. The first converter 42a works to convert the DC current command signal into the pseudo torque command signal using *PI* control based on a difference from the detected DC current signal Idc and a predetermined map, and output the pseudo torque command signal to the first controller 41.

Upon input of the pseudo resolver signal that is a two-phase sin/cos signal to the first controller 41, the second signal generator 41b reconverts the pseudo-resolver signal into the phase angle signal using an RD converter. Based on the phase angle signal, the first signal generator 41a converts the three-phase (U-, V-, and W-phase) current *UVW* input at (1) in Fig. 4 into the *d*-axis current Id and the q-axis current Iq (see (4) in Fig. 4). Alternatively, when a general-purpose inverter not equipped with an RD converter is used, the phase angle signal may be input directly to the first controller 41 without performing processing such as conversion into the resolver signal.

Further, the first signal generator 41a converts the pseudo torque command signal input from the second controller 42 into a d-axis current command signal and a *q-*axis current command signal (see (5) in Fig. 4). The first signal generator 41a then calculates differences between the d-axis current command signal and the corresponding d-axis current Id derived at (4) and between the q-axis current command signal and the corresponding *q*-axis current Iq derived at (4), and converts the respective differences, by *PI* control, into a *d*-axis voltage command signal and a q-axis voltage command signal (see (6) in Fig. 4).

The third signal generator 41c also uses the phase angle signal generated by the first controller 41 to convert the *dq*-axis voltage command signals illustrated at (6) in Fig. 4 into the three-phase voltage command signals Vc (see (7) in Fig. 4). The third signal generator 41c receives, from the power conversion device 3, the DC link voltage VH representing a voltage across the DC-link capacitor 34 and calculates a three-phase duty command by dividing each of the three-phase voltage command signals Vc by VH/2 (i.e., 2·Vc/VH) (see (8) in Fig. 4). The gate command signal based on the PWM scheme is generated from each of the three-phase duty commands and outputted to the power conversion device 3 (see (9) in Fig. 4).

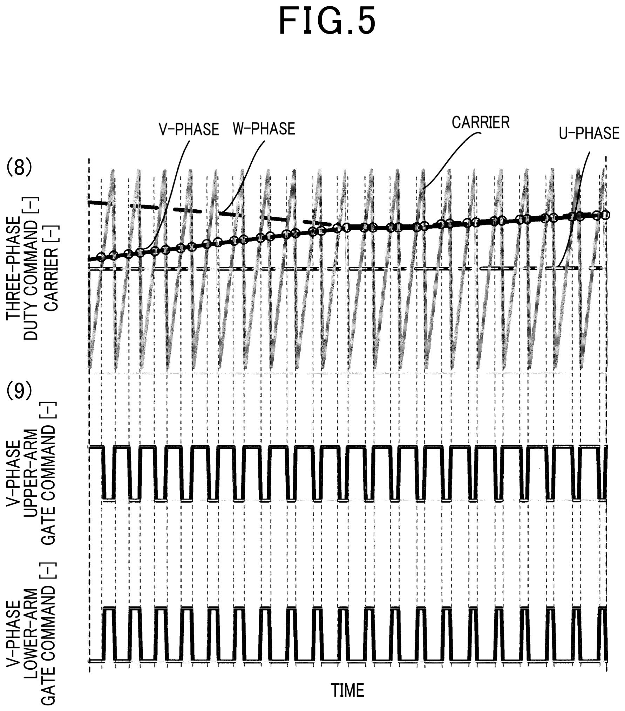

Fig. 5 illustrates an example of control in which DC power is supplied to the load 2 using two phases, namely the V-phase and the W-phase and shows the relationship between the three-phase duty command signals illustrated at (8) in Fig. 4 and the gate command signals, as illustrated at (9) in Fig. 4, generated based on the three-phase duty command signals. In Fig. 5, the gate command signals only for the V-phase are illustrated for the brevity of illustration, and the other phases are omitted. In the illustrated example, the duty command signal for the V-phase is converted into a rectangular-wave signal by comparison with a triangular-wave carrier signal, and gate command signals for commanding ON/OFF of the upper-arm switch 321v and the lower-arm switch 322v, respectively, are generated.

In the above-described manner, switching control is performed for each phase at a predetermined duty factor, and gate command signals are repeatedly generated based on the respective phase currents Iv and Iw and a target DC current command. As described above (see Fig. 3), control is performed such that the outputs of the V-phase and the W-phase become equal to each other. Specifically, the duty command value for the V-phase is gradually increased, while the duty command value for the W-phase is gradually decreased, so that the two duty command values become equal within a short time after the start of control. Thereafter, each phase is controlled with a constant duty command value. Further, in accordance with changes in the target DC current command value, the duty command values may be controlled to increase or decrease by correspondingly increasing or decreasing the pseudo torque command signal.

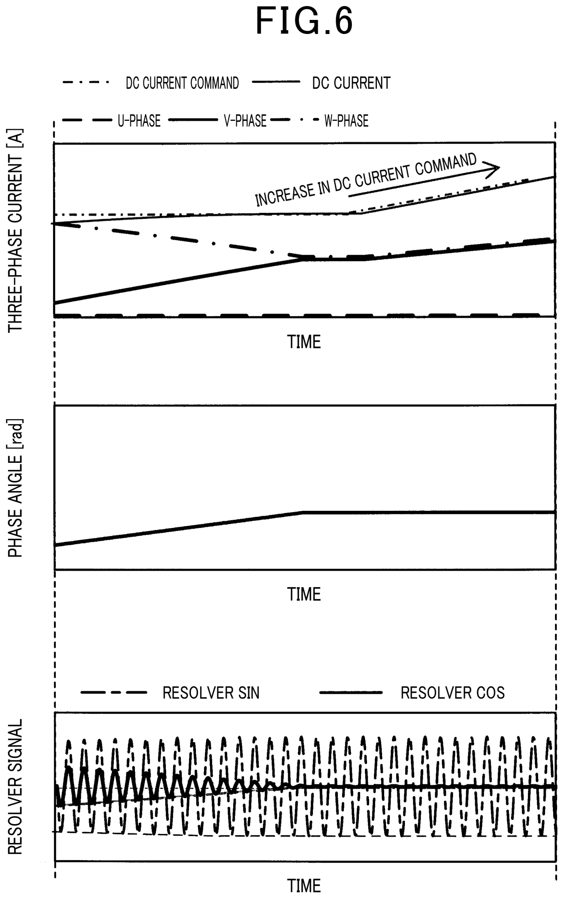

Fig. 6 shows, together with temporal changes in the phase-angle signal illustrated at (2) in Fig. 4 and the resolver signal illustrated at (3) in Fig. 4, the relationship among the three-phase duty commands shown in Fig. 5, the DC current command, and the three-phase currents. As can be seen, in order to follow the target DC current command, a phase angle calculated based on the phase currents Iv and Iw input to the second controller 42 changes and converges to a constant value, and the corresponding resolver signal varies accordingly. Further, when the DC current command increases, the phase currents Iv and Iw each increase because control is performed such that the duty commands increase while the phase angle is held constant.

In the above-described manner, the DC current supplied to the power supply wiring 5 is rapidly brought to the target DC current command and is further controlled to quickly follow changes in the DC current command. Note that, among the three phases, the phase current Iu of the non-operated U phase is approximately 0 A.

As apparent from the above discussion, the present embodiment works to control the operation of the power conversion device 3, which includes the three-phase full-bridge circuit 31, using the controller 4 including the first controller 41 and the second controller 42, convert DC power inputted to the power conversion system 1 into required DC power, and output it. Further, the present embodiment is capable of using a general-purpose inverter and/or a control device therefor as the power conversion device 3 and the first controller 41, thereby enabling a vehicle PCU or the like to be reused and effectively utilized.

### SECOND EMBODIMENT

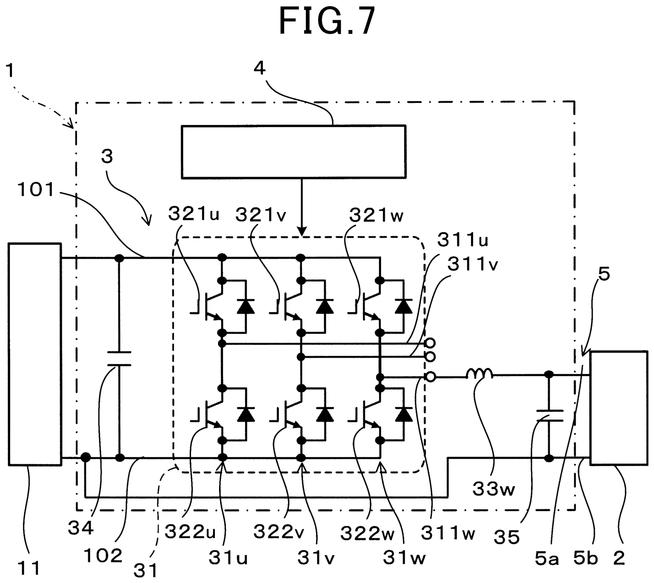

The power conversion system 1 according to the second embodiment will be described with reference to Fig. 7. The power conversion device 3 of the power conversions system 1 in this embodiment differs in configuration from that of the first embodiment described above. Other arrangements are the same as those of the first embodiment, and a description thereof in detail will be omitted here. The same reference numbers or symbols as those used in the second and subsequent embodiments refer to the same parts unless otherwise specified.

The power conversion system 1 in this embodiment is designed to have only one of the three phases which is connected to the load 2. Specifically, the power conversion system 1 is designed to have the output line 311w connected to the power supply wiring 5 through the reactor 33w. The output line 311w is connected to the midpoint of the leg 31w for the W-phase of the three-phase full-bridge circuit 31. The power supply wiring 5 leads to the load 2. The output lines 311u and 311v, which are connected to the legs 31u and 31v of the U phase and the V phase, respectively, are unused.

The power conversion system 1 in this embodiment is capable of performing the same control tasks as those in the first embodiment, thereby electrical power generated in accordance with a requirement of the load 2 and supplying the electrical power to the load 2. The configuration of this embodiment provides the same advantageous effects as those in the first embodiment.

### THIRD EMBODIMENT

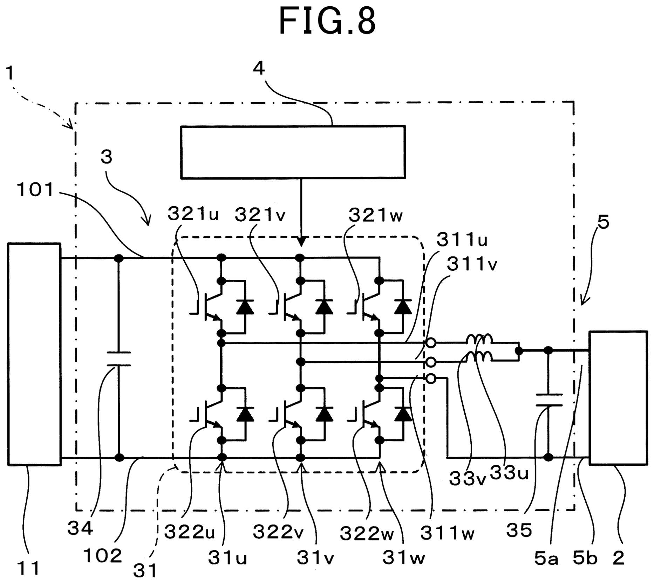

The power conversion system 1 according to the third embodiment will be described with reference to Fig. 8. The power conversion system 1 in this embodiment is different in connection structure to the load 2 from that of the first embodiment described above.

The power conversion device 3 in this embodiment is, as in the first embodiment, configured to connect the output lines 311u and 311v of two phases (here, the U-phase and the V-phase) of the three-phase full-bridge circuit 31 to the power supply wiring 5 leading to the load 2. The remaining phase (here, the W-phase) is not operated, and its output line 311w is unused.

In the present embodiment, a terminal of the output line 311w, which serves as an unused line, is connected to the negative winding 5b of the load 2. Accordingly, even when the power conversion device 3 is not provided with an external-connection ground terminal, an electrical connection between the power conversion system 1 and the load 2 is ensured without structural modification. Other advantageous effects similar to those of the first embodiment described above are also obtained.

### FOURTH EMBODIMENT

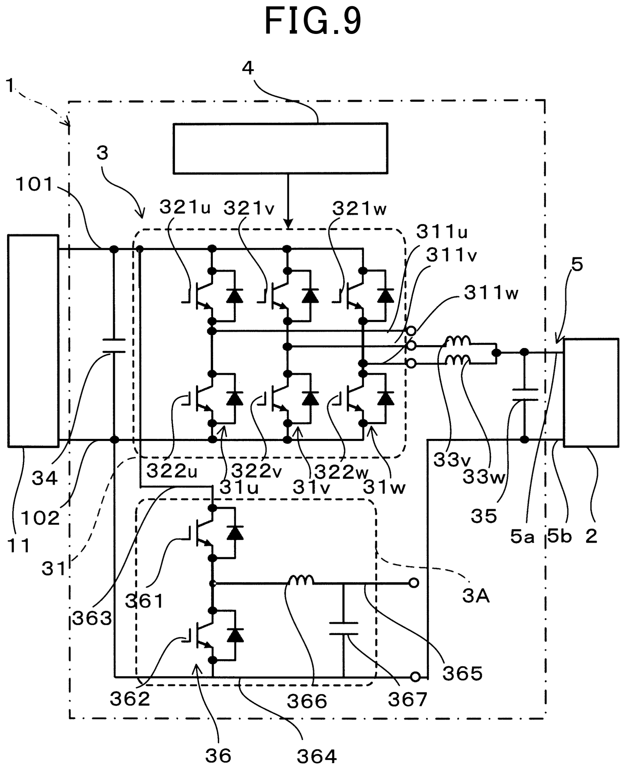

The power conversion system 1 according to the fourth embodiment will be described with reference to Fig. 9. The power conversion system 1 in this embodiment is different in connection arrangement to the load 2 from that of the first embodiment described above.

The power conversion system 1 in this embodiment is equipped with a PCU (Power Control Unit usually used in automotive vehicles) which serves as the power conversion device 3 and includes the first power converter 3A in addition to the three-phase full-bridge circuit 31. Specifically, the first power converter 3A includes one leg 36, which is composed of the upper-arm switch 361 and the lower-arm switch 362, between the three-phase full-bridge circuit 31 and the DC-link capacitor 34. The upper-arm switch 361 is connected to the high-potential line 101 via the first wiring 363, and the lower-arm switch 362 is connected to the low-potential line 102 via the second wiring 364.

The reactor 366 is connected in series with the third wiring 365, which is connected to the midpoint of the leg 36. The capacitor 367 is arranged between the third wiring 365 and the second wiring 364. The capacitor 367 is connected between the reactor 366 and a positive terminal (i.e., an external connection terminal) on the third wiring 365.

In this embodiment, the first power conversion unit 3A is not used for power conversion, and the third wiring 365 serves as an unused line. The second wiring 364 has a first end coupled to the low-potential line 102 and a second end coupled to the negative line 5b of the load 2 via a negative terminal provided at the second end.

The above configuration enables the negative winding 5b of the load 2 to be electrically connected to the low-potential side of the power conversion device 3 via the external connection terminal. Thus, a reliable electrical connection is ensured without structural modification. Moreover, the same operational advantages as in the first embodiment described above are obtained.

### FIFTH EMBODIMENT

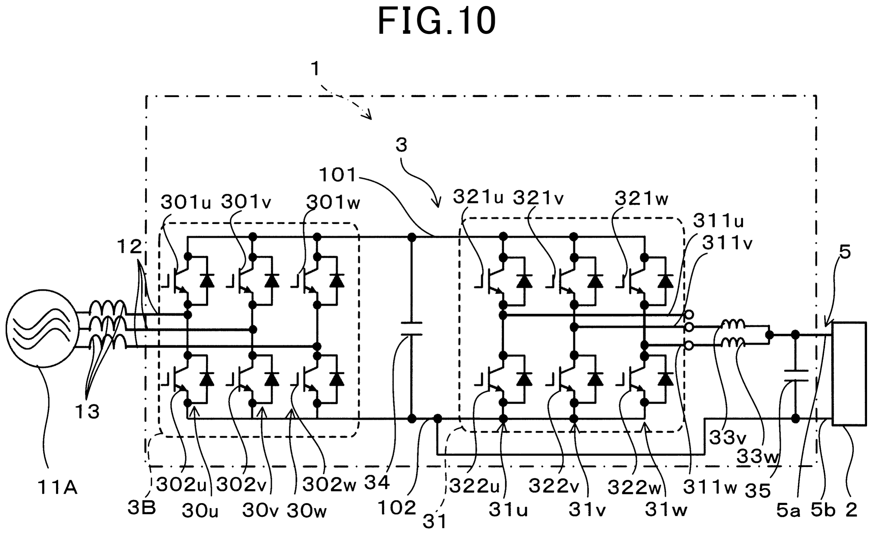

The power conversion system 1 according to the fifth embodiment will be described below with reference to Fig. 10. The power conversion system 1 is, as can be seen from the drawing, different in structure of the power conversion device 3 from that in the first embodiment.

The power conversion system 1 in this embodiment is equipped with a PCU (Power Control Unit usually used in automotive vehicles) which serves as the power conversion device 3 and includes the second power converter 3B functioning as an inverter in addition to the three-phase full-bridge circuit 31. In addition, the power conversion device 3 works to convert *AC* power supplied from the three-phase AC power supply 11A into *DC* power and supplies the *DC* power to the load 2. The three-phase AC power supply 11A is, for example, a utility grid.

The second power conversion unit 3B of the power conversion device 3 is disposed between the three-phase AC power supply 11A and the DC-link capacitor 34, and converts input AC power into DC power. The second power conversion unit 3B has a configuration similar to that of the three-phase full-bridge circuit 31, and includes three legs 30u, 30v, and 30w connected in parallel between the high-potential line 101 and the low-potential line 102. In each of the legs 30u, 30v, and 30w, the collector of a corresponding one of the upper-arm switches 301u, 301v, and 301w is connected to the high-potential line 101, and the emitter of a corresponding one of the lower-arm switches 302u, 302v, and 302w is connected to the low-potential line 102.

Midpoints of the three-phase legs 30u, 30v, and 30w of the second power conversion unit 3B are connected to the input wirings 12 of the three-phase AC power supply 11A through the reactors 13, respectively. The second power conversion unit 3B is switching-controlled by gate commands generated by the controller 4 in the same manner as a normal inverter, thereby converting three-phase AC power into DC power and outputting the DC power to electrically charge the DC-link capacitor 34. The configuration and operation of the three-phase full-bridge circuit 31 are the same as those in the first embodiment described above.

In the case where the source power is AC power as described above, the second power conversion unit 3B may be provided between the three-phase AC power supply 11A and the three-phase full-bridge circuit 31 to convert the source power into DC power and supply the DC power to the three-phase full-bridge circuit 31. Accordingly, the power conversion system 1 in this embodiment is capable of delivering required DC power to the load 2. The structure in this embodiment provides the same operational advantages as those in the first embodiment.

The power conversion system 1 in each of the third to fifth embodiments may be, like in the second embodiment, configured to operate only one phase of the three-phase full-bridge circuit 31. In addition, the connection point between the negative winding 5b of the load 2 and a low-potential side of the power conversion device 3 may be selected as appropriate. Further, the power conversion device 3 having the configuration shown in each of the first to fifth embodiments may be used as a basic unit, and a plurality of such basic units may be connected in parallel and connected to the load 2.

The present invention is not limited to the above-described embodiments, and may be applied to various embodiments without departing from the gist (spirit) of the invention. Modes or aspects of the present invention are described below.

### FIRST ASPECT

A power conversion system comprising:
a power conversion device (3) which works to convert power delivered from a power source into power supplied to a stationary load (2); and
a controller (4) which works to control an operation of the power conversion device, wherein
the power conversion device includes a three-phase full-bridge circuit (31) to which a *dc* power is inputted,
the three-phase full-bridge circuit includes a first leg (31u), a second leg (31v), and a third leg (31w) which correspond to a first phase, a second phase, and a third phase, respectively, and are connected in parallel to each other between a high-potential line (101) and a low-potential line (102),
each of the first, second, and third legs includes an upper-arm switch (321u, 321v, 321w) and a lower-arm switch (322u, 322v, 322w) which are connected in series with each other,
one or two of the first to third legs of the three-phase full-bridge circuit have midpoints connected through reactors (33v, 33w) to a power supply wiring (5) for the load,
the controller includes a first controller (41) and a second controller (42),
the first controller receives inputs of a pseudo torque command signal, as derived from an output command signal, and a phase angle signal, as derived from a detection signal indicative of the supplied power, to control a switching operation of the power conversion device, and
the second controller works to produce and output the pseudo torque command signal and the phase angle signal to the first controller.

### SECOND ASPECT

The power conversion system as set forth in the above first aspect, wherein the second controller uses the detection signal indicative of the supplied power and converts the output command signal for the load into a torque-equivalent signal which corresponds torque generated by rotational motion of a rotating machine. The second controller outputs the torque-equivalent signal as the pseudo torque command signal.

### THIRD ASPECT

The power conversion system as set forth in the above second aspect, wherein the second controller calculates the phase angle signal using the detection signal indicative of the supplied power and converts the phase angle signal into a rotational-angle-equivalent signal which corresponds to a rotational angle in the rotational motion of the rotating machine. The second controller outputs the rotational-angle-equivalent signal as a pseudo rotational angle signal.

### FOURTH ASPECT

The power conversion system as set forth in the above third aspect, wherein the first controller includes a first signal generator (41a), a second signal generator (41b), a third signal generator (41c), and a fourth signal generator (41d). The first signal generator works to convert the pseudo torque command signal into a voltage command signal. The second signal generator works to convert the pseudo rotational angle signal into the phase angle signal. The third signal generator works to produce three-phase voltage command signal based on the voltage command signal and the phase angle signal. The fourth signal generator works to use the three-phase voltage command signal and the phase angle signal to produce a switching command signal for controlling a switching operation of each of the upper-arm switches and the lower-arm switches.

The second controller includes a first converter (42a) and a second converter (42b). The first converter converts the output command signal into the pseudo torque command signal. The second converter converts the phase angle signal into the pseudo rotational angle signal.

### FIFTH ASPECT

The power conversion system as set forth in any one of the first to fourth aspects, wherein the power supplied to the load is a dc power. The second controller outputs the phase angle signal to the first controller in a form of a constant signal.

### SIXTH ASPECT

The power conversion system as set forth in any one of the first to fifth aspects, wherein two of the first, second, and third legs of the three-phase full-bridge circuit have the midpoints thereof connected to output lines (311v, 311w) which are connected to the power supply wiring. The controller works to control a switching operation of the power conversion device to make powers, which are outputted to the output lines leading to the two of the first, second, and third legs, equal to each other.

### SEVENTH ASPECT

The power conversion system as set forth in any one of the above first to sixth aspects, wherein the power conversion device and the load are electrically connected together using a positive line (5a) and a negative line (5b) of the power supply wiring. The negative line is connected to a low-potential part of the power conversion device.

### EIGHTH ASPECT

The power conversion system as set forth in the above seventh aspect, wherein the negative line is connected to a midpoint of one of the first, second, and third legs of the three-phase full-bridge circuit which is not connected to the positive line.

### NINTH ASPECT

The power conversion system as set forth in any one of the first to eighth aspects, wherein the power conversion device includes a DC-link capacitor (34) and a power conversion unit (3B). The DC-link capacitor connects between the high-potential line and the low-potential line and is arranged between an AC power supply (11A) and the three-phase full-bridge circuit. The power conversion unit is disposed between the AC power supply and the DC-link capacitor and works to convert *ac* power into *dc* power.

## Claims

1. A power conversion system comprising:
a power conversion device (3) which works to convert power delivered from a power source into power supplied to a stationary load (2); and
a controller (4) which works to control an operation of the power conversion device, wherein
the power conversion device includes a three-phase full-bridge circuit (31) to which a dc power is inputted,
the three-phase full-bridge circuit includes a first leg (31u), a second leg (31v), and a third leg (31w) which correspond to a first phase, a second phase, and a third phase, respectively, and are connected in parallel to each other between a high-potential line (101) and a low-potential line (102),
each of the first, second, and third legs includes an upper-arm switch (321u, 321v, 321w) and a lower-arm switch (322u, 322v, 322w) which are connected in series with each other,
one or two of the first to third legs of the three-phase full-bridge circuit have midpoints connected through reactors (33v, 33w) to a power supply wiring (5) for the load,
the controller includes a first controller (41) and a second controller (42),
the first controller receives inputs of a pseudo torque command signal, as derived from an output command signal, and a phase angle signal, as derived from a detection signal indicative of the supplied power, to control a switching operation of the power conversion device, and
the second controller works to produce and output the pseudo torque command signal and the phase angle signal to the first controller.

2. The power conversion system as set forth in claim 1, wherein the second controller uses the detection signal indicative of the supplied power and converts the output command signal for the load into a torque-equivalent signal which corresponds torque generated by rotational motion of a rotating machine, the second controller outputting the torque-equivalent signal as the pseudo torque command signal.

3. The power conversion system as set forth in claim 2, wherein the second controller calculates the phase angle signal using the detection signal indicative of the supplied power and converts the phase angle signal into a rotational-angle-equivalent signal which corresponds to a rotational angle in the rotational motion of the rotating machine, the second controller outputting the rotational-angle-equivalent signal as a pseudo rotational angle signal.

4. The power conversion system as set forth in claim 3, wherein the first controller includes a first signal generator (41a), a second signal generator (41b), a third signal generator (41c), and a fourth signal generator (41d), the first signal generator working to convert the pseudo torque command signal into a voltage command signal, the second signal generator working to convert the pseudo rotational angle signal into the phase angle signal, the third signal generator working to produce three-phase voltage command signal based on the voltage command signal and the phase angle signal, the fourth signal generator working to use the three-phase voltage command signal and the phase angle signal to produce a switching command signal for controlling a switching operation of each of the upper-arm switches and the lower-arm switches, and
the second controller includes a first converter (42a) and a second converter (42b), the first converter converting the output command signal into the pseudo torque command signal, the second converter converting the phase angle signal into the pseudo rotational angle signal.

5. The power conversion system as set forth in claim 1, wherein the power supplied to the load is a dc power, and
the second controller outputs the phase angle signal to the first controller in a form of a constant signal.

6. The power conversion system as set forth in claim 5, wherein two of the first, second, and third legs of the three-phase full-bridge circuit have the midpoints thereof connected to output lines (311v, 311w) which are connected to the power supply wiring, and
the controller works to control a switching operation of the power conversion device to make powers, as outputted to the output lines leading to the two of the first, second, and third legs, equal to each other.

7. The power conversion system as set forth in any one of claims 1 to 6, wherein the power conversion device and the load are electrically connected together using a positive line (5a) and a negative line (5b) of the power supply wiring, and
the negative line is connected to a low-potential side of the power conversion device.

8. The power conversion system as set forth in claim 7, wherein the negative line is connected to a midpoint of one of the first, second, and third legs of the three-phase full-bridge circuit which is not connected to the positive line.

9. The power conversion system as set forth in any one of claims 1 to 6, wherein the power conversion device includes a DC-link capacitor (34) and a power conversion unit (3B), the DC-link capacitor connecting between the high-potential line and the low-potential line and being arranged between an AC power supply (11A) and the three-phase full-bridge circuit, the power conversion unit being disposed between the AC power supply and the DC-link capacitor and working to convert ac power into dc power.
